# EUROPÄISCHE PATENTSCHRIFT

(11) **EP 0 517 935 B1**
(45) Veröffentlichungstag und Bekanntmachung des Hinweises auf die Patenterteilung: **24.05.1995**
(21) Anmeldenummer: 91109503.2
(22) Anmeldetag: 10.06.1991
(51) Int. Cl.: H01G 4/228, H01G 4/38

(54) **Niederinduktives Kondensatormodul**
Low-inductance capacitor module
Module de condensateur à faible inductance

(43) Veröffentlichungstag der Anmeldung: 16.12.1992
(73) Patentinhaber: SIEMENS MATSUSHITA COMPONENTS GmbH & CO KG, 81617 München (DE)
(72) Erfinder: Vetter, Harald, Dipl.-Ing. (FH), W-7920 Heidenheim 5 (DE)
(74) Vertreter: Fuchs, Franz-Josef, Dr.-Ing.

(56) Entgegenhaltungen:
- EP-A- 0 127 117
- EP-A- 0 180 007
- DE-A- 3 609 040
- FR-A- 2 127 238
- NTIS TECH NOTES, Nr. 11, 1985, Springfield, VA, US, Seiten 1282 - 1283; NASA: "High-Frequency, High-Power Capacitor"
- SIEMENS COMPONENTS, Bd. 25, Nr. 3, Juli 1990,Berlin, DE,Seiten 81 - 86; H. VETTER: "High-Performance Capacitors or Low-Inductance Circuits"

## Beschreibung

Die Erfindung betrifft ein niederinduktives Kondensatormodul zur Beschaltung hochfrequenter GTO-Thyristoren mit einem Beschaltungs- und einem Speicherkondensator, bei dem die Verbindung zwischen Modul und Thyristor mittels Bandleitungen erfolgt, die an Stirnkontaktschichten des als Wickelkondensator ausgebildeten Kondensatormoduls befestigt sind.

Die Induktivität von Wickelkondensatoren ist u. a. abhängig von der Wickelbreite, der Wickelanzahl bzw. der Geometrie und insbesondere von den Anschlußelementen, ausgehend vom jeweils betrachteten Wickel zur Kontaktebene der äußeren Anschlüsse. Wickelkondensatoren in einem Aluminium-Bechergehäuse erreichen ca. 200 nH Eigeninduktivität.

Für moderne GTO-Beschaltungen ist jedoch eine Kreisinduktivität von < 200 nH notwendig, wobei sich die Kreisinduktivität aus der Eigeninduktivität des Kondensators und der Induktivität der Verbingungsleitungen zwischen Kondensator und GTO-Thyristor zusammensetzt.

Aus der DE 36 09 040 A1 ist ein elektrischer Wickelkondensator mit verringerter Eigeninduktivität bekannt. Bei diesem Kondensator bestehen die äußeren Anschlüsse und Anschlußelemente aus einer als Bandleiter ausgebildeten Baueinheit. Der Kondensatorwickel selbst kann aus mehreren konzentrisch aufeinander gewickelten Teilkapazitäten aufgebaut sein, die miteinander in Serie geschaltet sind. Zur Rückleitung dient der metallisch ausgebildete Kondensatorbecher, der mit der einen Stirnkontaktschicht des Kondensatorwickels leitend verbunden ist.

Der bekannte Kondensator weist zwar eine reduzierte Induktivität gegenüber üblichen Wickelkondensatoren auf, jedoch eignet er sich weniger zum Einsatz für die neueste Generation von hochfrequenten GTO-Thyristoren, die zur optimalen Leistungsausnutzung des teuren Halbleiterbauelements eine auf ca. 50 nH reduzierte Kreisinduktivität benötigen.

Aufgabe der Erfindung ist es daher, ein Kondensatormodul der eingangs genannten Art anzugeben, das eine deutliche Reduzierung der Kreisinduktivität besitzt.

Diese Aufgabe wird durch ein Kondensatormodul gelöst, das die im Patentanspruch 1 angeführten Merkmale besitzt.

Vorteilhafte Ausgestaltungen des Kondensatormoduls bestehen darin, daß die Bandleitungen aus einer geätzten Leiterplatte bestehen und daß die Verbindung zwischen Bandleitung und Thyristor durch einen aufgelöteten Kupferwinkel erfolgt. Der Gegenstand der Erfindung wird anhand von Ausführungsbeispielen erläutert.

In der dazugehörenden Zeichnung zeigen
Figur 1 eine schematische Darstellung eines Kondensatormoduls in Seitenansicht,
Figur 2 das Kondensatormodul nach Figur 1 in Draufsicht und
Figur 3 die schematische Darstellung einer Bandleitung.

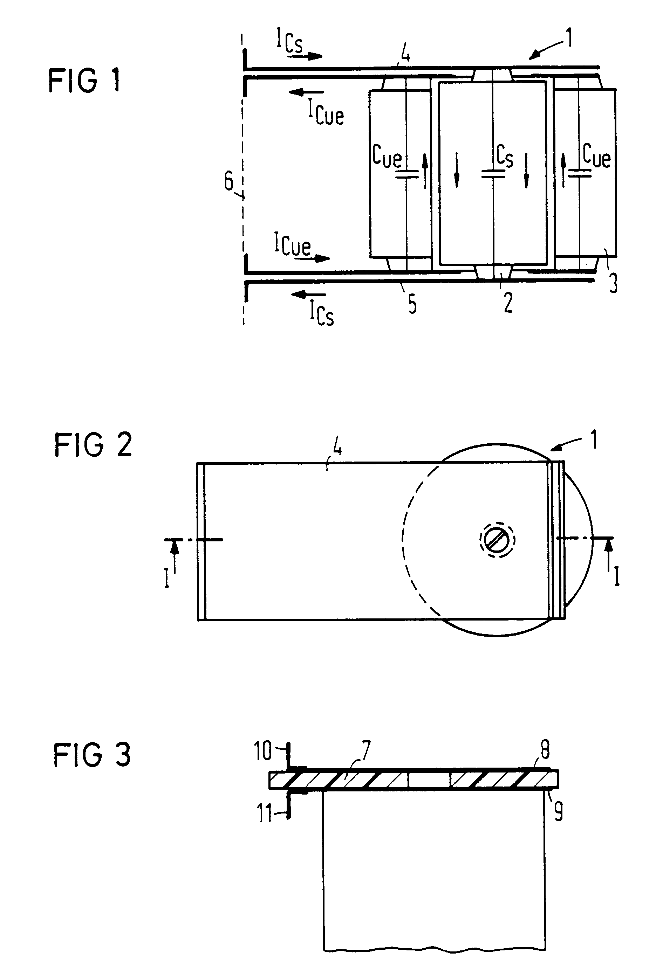

In der Figur 1 ist ein Kondensatormodul 1 dargestellt, das aus einem Beschaltungskondensator 2 und einem Speicherkondensator 3 besteht. Beschaltungskondensator 2 und Speicherkondensator 3 sind als Doppelkondensator ausgebildet, wobei der Speicherkondensator 3 koaxial und konzentrisch auf den Beschaltungskondensator 2 gewickelt ist. Beschaltungskondensator 2 und Speicherkondensator 3 sind elektrisch voneinander getrennt. Der Beschaltungskondensator 2 besitzt die Kapazität Cₛ, während der Speicherkondensator 3 die Kapazität Cᵤₑ aufweist.

Beschaltungs- 2 und Speicherkondensator 3 sind in ein in der Figur 1 nicht dargestelltes Gehäuse eingebaut.

Die Kondensatoren 2, 3 sind über Bandleitungen 4, 5 mit einer Halbleitersäule 6 verbunden. Dabei sind die Bandleitungen 4, 5 an den gegenüberliegenden Stirnseiten der Kondensatoren 2, 3 derart befestigt, daß Zuführung und Rückführung der Kondensatorströme I_{Cs} bzw. I_{Cue} direkt übereinander angeordnet sind, wobei Zuführung für den einen Kondensator und Rückführung für den anderen Kondensator auf derselben Seite liegen.

Durch die in der Figur 1 dargestellte Ausführungsform läßt sich die Kreisinduktivität auf ca. 40 nH reduzieren.

In der Figur 2 ist eine Draufsicht auf das Kondensatormodul 1 der Figur 1 dargestellt, wobei in der Figur 2 die Schnittebene angeführt ist, unter der die Figur 1 betrachtet wird.

In der Figur 3 ist eine spezielle Ausführungsform einer Bandleitung 7 dargestellt, die aus einer geeignet geätzten Leiterplatte hergestellt ist. Die Leiterbahn wird durch die Kupferkaschierungen 8, 9 erzeugt. Der notwendige Abgriff an der Halbleitersäule kann vorzugsweise durch aufgelötete Kupferwinkel 10, 11 erfolgen.

Die möglichst große Minimierung der Kreisinduktivität des Kondensatormoduls wird durch optimale Ausnutzung des vorhandenen Raumes für Bandleitungen und Kondensatoren erreicht. Die Optimierungskriterien für die Bandleitungen sind ein minimaler Leiterabstand, maximale Breite und minimale Länge. Für den Kondensatoraufbau muß unter Beachtung der vorgegebenen Geometrie der Halbleitersäule ein günstiges Durchmesser- Höhenverhältnis ermittelt werden, so daß für das Kondensatormodul und damit für den Beschaltungskreis eine minimale Induiktivität erreicht wird.

Bei einem Ausführungsbeispiel wird ein Kondensatormodul der Abmessungen 0̸ = 100 mm, h = 190 mm und Kapazitäten Cₛ = 3 »F, Cᵤₑ = 15 »F verwendet, das mit Bandlei-tungen kontaktiert ist, die eine Breite von 100 mm und eine mittlere Länge von 60 mm sowie einen Leiterabstand von 4 mm besitzen. Damit wird eine Kreisinduktivität von 40 nH erreicht.

## Patentansprüche

1. Niederinduktives Kondensatormodul (1) zur Beschaltung hochfrequenter GTO-Thyristoren mit einem Beschaltungs- (2) und einem Speicherkondensator (3), bei dem die Verbindung zwischen Modul (1) und Thyristor mittels Bandleitungen (4,5) erfolgt, die an Stirnkontaktschichten des als Wickelkondensator ausgebildeten Kondensatormoduls(l) befestigt sind,
**dadurch gekennzeichnet**,
daß Beschaltungs- (2) und Speicherkondensator (3) als Doppelkondensator ausgebildet und koaxial und konzentrisch zueinander angeordnet sind, daß die Bandleitungen (4, 5) an gegenüberliegenden Stirnseiten des Moduls (1) befestigt sind und daß die Bandleitungen (4, 5) derart angeordnet sind, daß Zuführung und Rückführung der Kondensatorströme (I_{Cs,} I_{Cue}) direkt übereinander angeordnet sind und die Zuführung für den einen Kondensator und die Rückführung für den anderen Kondensator auf derselben Seite liegen.

2. Kondensatormodul nach Anspruch 1, **dadurch gekennzeichnet**, daß die Bandleitungen (7) aus einer geätzten Leiterplatte bestehen.

3. Kondensatormodul nach Anspruch 1 oder 2, **dadurch gekennzeichnet**, daß die Verbindung zwischen Bandleitungen (7) und Thyristor durch aufgelötete Kupferwinkel (10, 11) erfolgt

## Claims

1. Low-inductance capacitor module (1) for the circuitry of radio-frequency GTO thyristors, having a circuit capacitor (2) and a storage capacitor (3), in the case of which the module (1) and the thyristor are connected by means of striplines (4, 5) which are attached to end contact layers of the capacitor module (1) which is designed as a wound capacitor, characterized in that the circuit capacitor (2) and the storage capacitor (3) are designed as a twin capacitor and are arranged coaxially and concentrically with respect to one another, in that the striplines (4, 5) are attached to opposite ends of the module (1), and in that the striplines (4, 5) are arranged in such a way that the supply line and return line for the capacitor currents (I_{Cs}, I_{Cue}) are arranged directly above one another and the supply line for the one capacitor and the return line for the other capacitor are situated on the same side.

2. Capacitor module according to Claim 1, characterized in that the striplines (7) comprise an etched printed circuit board.

3. Capacitor module according to Claim 1 or 2, characterized in that the striplines (7) and the thyristor are connected by soldered-on copper brackets (10, 11).

## Revendications

1. Module de condensateurs (1) de faible inductance pour le branchement de thyristors GTO à haute fréquence, comportant un condensateur de câblage (2) et un condensateur d'accumulation d'énergie électrique, dans lequel la liaison entre le module (1) et le thyristor est réalisée au moyen de conducteurs en forme de rubans (4,5), qui sont fixés à des couches de contact frontal du module de condensateurs (1) réalisé sous la forme d'un condensateur bobiné, caractérisé par le fait que le condensateur de câblage (2) et le condensateur d'accumulation (3) sont agencés sous la forme d'un condensateur double et sont disposés concentriquement entre eux, que les conducteurs en forme de rubans (4,5) sont fixés sur des faces frontales opposées du module (1) et sont disposés de telle sorte que les conducteurs en forme de rubans (4,5) sont disposés de telle sorte que l'élément d'arrivée et l'élément de retour de courants (I_{Cs}, I_{Cue}) des condensateurs sont directement superposés et que l'élément d'arrivée pour un condensateur et l'élément de retour pour l'autre condensateur sont situés sur le même côté.

2. Module de condensateurs suivant la revendication 1, caractérisé par le fait que les conducteurs en forme de rubans (7) sont constitués par une plaquette à circuits imprimés gravée.

3. Module de condensateurs suivant la revendication 1 ou 2, caractérisé par le fait que la liaison entre des conducteurs en forme de rubans (7) et le thyristor est réalisée au moyen de cornières en cuivre (10,11) fixées par brasage.
